# FASCICULE DE BREVET EUROPEEN

(11) **EP 1 062 077 B1**
(45) Date de publication et mention de la délivrance du brevet: **08.10.2003**
(21) Numéro de dépôt: 00900519.0
(22) Date de dépôt: 03.01.2000
(51) Int. Cl.: B25J 9/04, B25J 5/00

(54) **ROBOT MANIPULATEUR ET INSTALLATION LE COMPORTANT**
HANDHABUNGSROBOTER UND VORRICHTUNG MIT EINEM SOLCHEN ROBOTER
MANIPULATOR ROBOT AND INSTALLATION COMPRISING SAME

(30) Priorité: 05.01.1999 FR 9900028
(43) Date de publication de la demande: 27.12.2000
(73) Titulaire: Solignac, Jean Pierre, 34270 Saint Mathieu de Tréviers (FR)
(72) Inventeur: Solignac, Jean Pierre, 34270 Saint Mathieu de Tréviers (FR)
(74) Mandataire: Ravina, Bernard
(86) Numéro de dépôt international: FR0000001
(87) Numéro de publication internationale: WO00040376

(56) Documents cités:
- DE-A- 2 341 133
- FR-A- 2 070 719
- US-A- 4 531 884

## Description

La présente invention a pour objet un robot convoyeur pour notamment la manipulation et le transport d'un objet le long d'un trajet déterminé.

On connaît déjà des robots pour la manipulation d'objets. Ces robots comprennent un bras manipulateur mobile selon les trois axes de l'espace. Généralement ce bras est motorisé par trois structures motrices agencées selon une configuration cinématique dite en chaîne ouverte. La première de ces structures assure le déplacement du bras de manipulation selon un premier axe horizontal, la deuxième structure selon un second axe horizontal normal au précédent et la troisième selon un axe vertical. Les principaux inconvénients de ces structures résident dans leurs complexités et dans leurs coûts élevés.

Voir, par exemple FR 2 070 719 A et DE 2 341 133A.

La présente invention à pour objet de pallier les inconvénients précédemment cités en mettant en oeuvre un robot manipulateur d'une excellente efficacité tout en étant d'une conception simplifiée et d'un faible coût.

A cet effet le robot manipulateur motorisé selon la présente invention comporte un premier moteur et un bras manipulateur déplaçable par le premier moteur piloté par une unité de commande et de contrôle, ledit premier moteur et ladite unité étant installés dans un bâti monté sur des organes de roulement, et le premier moteur étant équipé d'un arbre de sortie rotatif sur lequel un couple mécanique est disponible. Ce robot se caractérise en ce que :
- le bras manipulateur est fixé par une des ses extrémités à un moyeu pourvu d'un taraudage axial dans lequel est engagée en vissage la partie filetée d'un arbre d'entraînement accouplé à l'arbre de sortie rotatif du premier moteur,
- un mécanisme de frein est lié au moyeu et à l'arbre d'entraînement, ce mécanisme de frein assurant l'immobilisation du moyeu par rapport à l'arbre d'entraînement tant que le couple résistant exercé sur le bras ou sur le moyeu est inférieur à une valeur prédéterminée, et permettant la rotation de l'un par rapport à l'autre lorsque ce couple résistant est égal à cette valeur,
- le robot comporte un mécanisme de blocage en rotation activable par l'unité de commande et de contrôle pour bloquer la rotation du moyeu et du bras, ce mécanisme lorsqu'il est activé agissant en blocage sur le moyeu et/ou sur le bras, ledit bras pouvant alors être déplacé en translation par rapport au châssis par activation du premier moteur.

On voit donc que cette disposition permet d'éviter l'usage d'un troisième moteur pour le déplacement du bras en translation. Le premier moteur assure le déplacement du bras en rotation lorsque le mécanisme de frein est désactivé et son entraînement en translation lorsque ce mécanisme est activé.

Selon une autre forme préférée de réalisation de l'invention, :
- le taraudage axial pratiqué dans le moyeu est prolongé axialement par un alésage lisse,
- l'arbre d'entraînement, dans le prolongement axial de sa partie filetée est dotée d'une portée lisse engagée dans l'alésage lisse du moyeu,
- le mécanisme de frein est constitué par un tampon en matière synthétique engagé dans un perçage radial pratiqué dans le moyeu et débouchant dans l'alésage axial de ce dernier, ledit tampon étant maintenu en pression contre la portée lisse de l'arbre d'entraînement.

La présente invention à également pour objet une installation qui se caractérise essentiellement en ce qu'elle est équipée d'au moins un robot selon l'invention.

Avantageusement, l'installation comporte au moins un poste de distribution de matières solides et/ou liquides selon des quantités dosées ainsi qu'au moins un poste de traitement, ces différents postes étant disposés les uns à la suite des autres en regard d'au moins une piste sur laquelle évolue le robot.

D'autres avantages de l'invention apparaîtront à la lecture de la description d'une forme préférée de réalisation, en se référant aux dessins annexés en lesquels :
- la figure 1 est une vue en coupe de profil du robot selon l'invention,
- la figure 2 est une vue en coupe de face du robot associé à une installation selon l'invention,

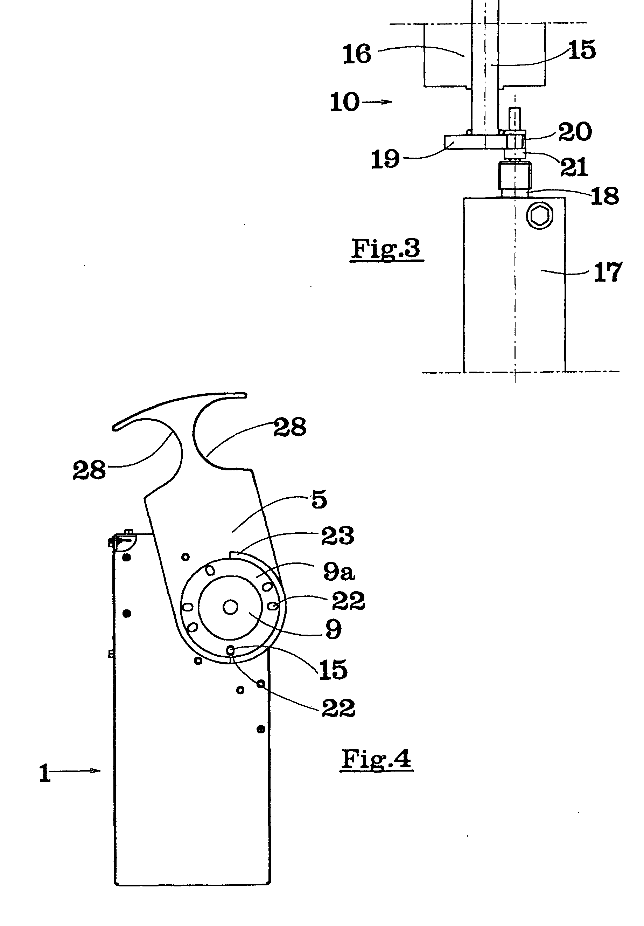

- la figure 3 est une vue de détail du robot selon l'invention,
- la figure 4 est une vue de dessus du robot selon l'invention,

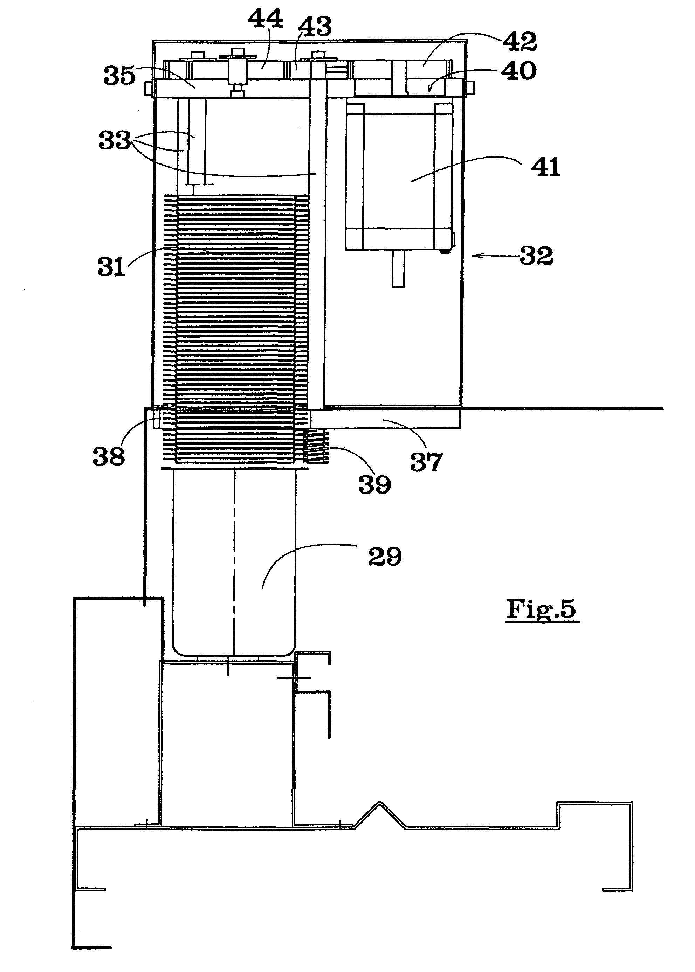

- la figure 5 est une vue en coupe longitudinale du distributeur de couvercle d'une installation selon l'invention,

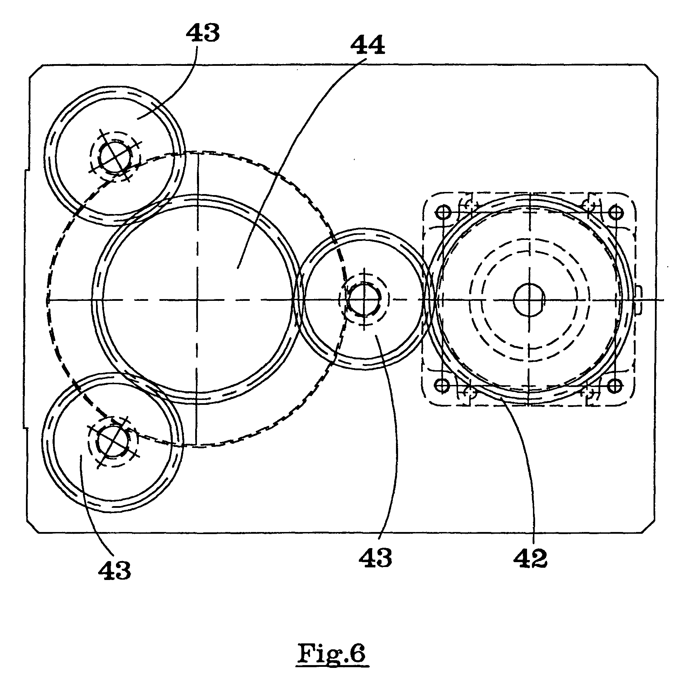

- la figure 6 est une vue de dessus du distributeur de couvercle de l'installation selon l'invention.

Tel que représenté le robot manipulateur 1 selon l'invention, comprend un châssis 2 monté sur des organes de roulement 3, 4 pour évoluer sur une piste. Le châssis est constitué par une structure tridimensionnelle définissant un volume parallépipédique, recevant un habillage de protection formant la paroi supérieure horizontale et les parois latérales verticales avant, arrière, droite et gauche du robot.

Le robot 1 comporte un bras manipulateur 5 horizontal, déplaçable en rotation dans un plan horizontal par un premier moteur 6 électrique, piloté par une unité de commande et de contrôle 7 installée en fixation sur le châssis, dans le volume que définit l'habillage. Dans ce volume peut être installée au moins une batterie électrique assurant l'alimentation en énergie électrique du premier moteur électrique, de l'unité de commande et de contrôle 7 et plus généralement de tous les composants électriques équipant le robot. L'alimentation électrique peut également être externe au robot auquel cas est prévue une ligne électrique d'un type connu pour connecter électriquement ladite alimentation aux composants électriques du robot. L'unité 7 commande et contrôle notamment les déplacements du bras 5.

Le moteur électrique 6 est du type comportant un arbre de sortie rotatif 6a sur lequel un couple moteur est disponible. L'arbre de sortie de ce moteur peut être mû en rotation dans un sens ou dans l'autre selon le sens de la tension électrique appliqué à ses bornes d'alimentation.

L'alimentation en énergie électrique et le sens de la tension appliquée aux bornes d'entrée du moteur 6 sont deux paramètres gérés par l'unité de commande et de contrôle 7.

Le moteur électrique 6 est fixé par son carter à la face inférieure de la paroi horizontale supérieure. Cette paroi, dans l'alignement axial de l'arbre de sortie du moteur électrique 6, est pourvue d'un perçage traversant, cylindrique, dans lequel s'engage l'embout d'accouplement 8a d'un arbre vertical 8 d'entraînement du bras 5. Cet embout d'accouplement 8a est fixé par clavetage à l'arbre de sortie 6a du moteur électrique 6.

L'arbre d'entraînement 8 comporte une partie filetée et une partie lisse formée dans le prolongement de la partie filetée. A cet arbre d'entraînement 8 est solidarisé un moyeu 9 recevant en fixation le bras manipulateur 5. Ce moyeu épouse une forme cylindrique et comporte en extrémité inférieure une embase 9a de contour circulaire.

Le moyeu 9 est pourvu d'un taraudage axial dans lequel est engagée en vissage la partie filetée de l'arbre d'entraînement 8. Dans le prolongement axial du taraudage, le moyeu 9 comporte un alésage lisse, débouchant dans la face supérieure du moyeu. Dans cet alésage lisse s'engage la portée lisse de l'arbre d'entraînement.

Au moyeu 9 et à l'arbre d'entraînement 8 est associé un mécanisme de frein assurant l'immobilisation de l'un par rapport à l'autre tant que le couple résistant exercé sur le moyeu 9 est inférieur à une valeur prédéterminée, et permettant la rotation de l'un par rapport à l'autre lorsque le couple résistant est égal à cette valeur. De plus est prévu un mécanisme de blocage en rotation 10 activable par l'unité de commande et de contrôle 7 pour agir sur le moyeu 9 et bloquer la rotation de ce dernier et donc du bras 5. Ce mécanisme 10, lorsqu'il est activé, assure le blocage du bras 5 en rotation par rapport au châssis. Ce bras 5 peut alors être déplacé en translation par rapport au châssis par activation du premier moteur 6. Lorsque ce mécanisme est désactivé et donc dégagé du moyeu 9, le bras 5 peut être entraîné en rotation par le premier moteur 6.

Selon la forme préférée de réalisation le mécanisme de frein est logé dans un perçage radial 11 pratiqué dans le moyeu et débouchant dans l'alésage axial de ce dernier. Ce mécanisme de frein est constitué par un tampon 12 cylindrique, en matière synthétique maintenu en pression contre la portée lisse de l'arbre d'entraînement. Selon la forme préférée de réalisation le tampon est maintenu contre cette portée lisse par une poussée axiale exercée par une vis 13 engagée en vissage dans un taraudage formé dans le perçage radial 11.

On conçoit donc que la transmission du couple moteur et du mouvement de rotation entre l'arbre d'entraînement et le moyeu s'effectue par l'intermédiaire du mécanisme de frein. On conçoit également que ce mouvement de rotation n'est plus transmis si le couple résistant exercé sur le moyeu atteint une certaine valeur dépendant directement des forces de pression entre le tampon 12 et la portée lisse de l'arbre d'entraînement 8. Par mesure du couple de serrage de la vis 13, il est donc possible d'ajuster de manière précise cette valeur. Lorsque le couple résistant atteint cette valeur, la transmission du mouvement de rotation au moyeu ne s'opère plus. En revanche comme l'arbre d'entraînement est toujours entraîné en rotation par le moteur 6, se produit, selon le sens de rotation de l'arbre de sortie du moteur, un mouvement de dévissage ou de vissage de la partie filetée de l'arbre 8 dans le taraudage du moyeu. Le moyeu, en raison de son blocage en rotation, est forcé à se déplacer en translation avec le bras 5, soit vers le haut (mouvement de dévissage), soit vers le bas (mouvement de vissage). De cette manière, le bras 5 peut être élevé par rapport au châssis puis abaissé.

Avantageusement la matière synthétique utilisée pour le tampon 12 est du type de celles commercialisées sous le nom de « TEFLON ». Pourront être utilisées d'autres matières de propriétés mécaniques équivalentes.
Grâce aux caractéristiques mécaniques de la matière employée, le tampon 12 assure efficacement le freinage de la vis 13 si bien que l'intensité des forces de pression du tampon contre la portée lisse de l'arbre demeure constante au cours du temps ou pour le moins varie très peu.

La course linéaire du bras est contrôlée par l'unité de contrôle et de commande 7 qui contrôle pour cela le nombre de tour effectués par l'arbre de sortie du moteur 6 grâce aux informations foumies par un compteur incrémental accouplé à cet arbre. Cependant pour pallier à tous risques de défaillance de l'unité de contrôle et de commande 7, l'arbre d'entraînement 8, extérieurement au moyeu, en extrémité libre, comporte une butée 14 formant épaulement. En position inférieure du bras 5 et donc du moyeu 9, la face supérieure de ce dernier est écartée de la butée. Cette butée est donc apte à limiter la course linéaire du bras 5 et plus particulièrement le mouvement ascendant de ce dernier.

Selon la forme préférée de réalisation, le mécanisme 10 de blocage en rotation est constitué d'un doigt de blocage 15, de préférence vertical, monté de manière mobile en translation dans un palier de guidage 16 solidaire du châssis et par un organe moteur 17 d'actionnement du doigt 15, piloté par l'unité de contrôle et de commande 7. Plus précisément le palier de guidage 16 est fixé dans une ouverture pratiquée dans la paroi supérieure de l'habillage. L'organe moteur 17 est doté d'un arbre de sortie 18 à déplacement linéaire lequel est solidarisé au doigt de blocage 15. Ce doigt de blocage, lorsque l'organe moteur 17 est activé, vient s'engager dans un perçage 22 pratiqué dans le moyeu 9 pour établir une liaison par obstacle et bloquer ce dernier en rotation. Plus précisément le perçage 22 est pratiqué dans l'embase 9a du moyeu 9.

Le perçage 22 matérialise la seule position angulaire du bras selon laquelle il peut être déplacé en translation. Il peut s'avérer utile de pouvoir déplacer le bras en translation alors qu'il occupe une autre position angulaire. Pour cette raison, le moyeu 9 pourra être prévu avec plusieurs perçages 22 dont l'emplacement est choisi en fonction des besoins.

Avantageusement l'organe moteur 17 est constitué par un électro-aimant.

Pour repérer la position du doigt de blocage 15 sont prévus deux capteurs capacitifs (non représentés) positionnés respectivement en regard des positions extrêmes du doigt 15 le long de sa course et connectés électriquement à l'unité de contrôle et de commande. Ces capteurs sont aptes à délivrer une information représentative de la position abaissée ou élevée du doigt de blocage 15 et donc une information relative au blocage en rotation du moyeu 9 ou au dégagement de ce dernier.

Pour simplifier le montage de l'électro-aimant 17 ainsi que du doigt 15 en évitant tout positionnement précis de l'un par rapport à l'autre, l'arbre de sortie 18 de l'électroaimant 17 et le doigt de blocage 15 sont solidarisés l'un à l'autre par un liaison semi-rigide. Selon la forme préférée de réalisation, l'arbre 18 et le doigt de blocage 15 sont axialement décalés l'un par rapport à l'autre et la liaison semi-rigide est constituée d'une part d'une forme de fourche formée dans un disque 19 fixé en partie inférieure du doigt de blocage 15 et d'une gorge circulaire 20 creusée dans une pièce d'embout cylindrique 21 fixée à l'arbre de sortie 18. La forme de fourche est engagée avec faible jeu dans la gorge 20. Une telle disposition est propice à éviter tout coincement.

Le moyeu 9 est équipé d'au moins un repère d'initialisation 23 face à la trajectoire duquel est disposé un détecteur connecté électriquement à l'unité de contrôle et de commande, ce détecteur fournissant un signal de détection du repère 23, ce signal étant utilisé par l'unité de contrôle et de commande 7 pour repérer la position angulaire origine du bras. Selon la forme préférée de réalisation, le repère d'initialisation 23 est constitué par une surépaisseur périphérique au moyeu, limitée par deux faces radiales d'extrémité diamétralement opposées . Cette surépaisseur est fixée par vis à l'embase 9a du moyeu 9.

Toujours selon la forme préférée de réalisation, le détecteur est du type photoélectrique. De préférence le détecteur est installé dans le volume que définit la structure du châssis. Pour détecter le passage du repère 23 est alors utilisée une fibre optique engagée par une de ses extrémités dans un perçage traversant pratiqué dans la paroi supérieure face à la trajectoire du repère 23 et positionné par son autre extrémité en regard de la cellule photoélectrique du détecteur.

Avantageusement sont prévus des moyens de détection du blocage du bras en rotation activés lorsque le mécanisme de blocage en rotation est désactivé. Ces moyens pour l'essentiel sont constitués par le codeur incrémental accouplé au moteur 6 et par l'unité de contrôle et de commande 7, laquelle compare à chaque instant la position angulaire réelle du bras à la position théorique de ce demier, cette position étant définie de manière logicielle. Dans le cas où l'écart entre ces deux positions est supérieur à une valeur prédéterminée, l'unité de commande et de contrôle 7 désactive le moteur 6.

L'un des organes de roulement est accouplé à un second moteur 24 piloté par l'unité de commande et de contrôle 7. Selon la forme préférée de réalisation, sont prévus trois organes de roulement dont les premier et deuxième 3 sont placés d'un côté du châssis et le troisième 4 de l'autre. Le troisième organe de roulement est accouplé à l'arbre de sortie du second organe moteur 24.

Un codeur incrémental est accouplé à l'arbre de sortie du second organe moteur 24. Ce codeur incrémental est connecté électriquement à l'unité de contrôle et de commande 7 et délivre une information relative à la position absolue du robot. Comme pour le bras, l'unité centrale compare en continu la position réelle du robot à la position théorique et coupe l'alimentation du moteur si l'écart de position est supérieur à une valeur prédéterminée.

Selon une première forme de réalisation, le troisième organe de roulement 4 est constitué par une roue crantée et est destiné à coopérer en engrènement avec une crémaillère 25 formée sur une piste 26 sur laquelle le robot est destiné à évoluer. Cette piste peut être rectiligne ou courbe ou bien peut suivre tout type de profil souhaité.

Les deux premiers organes de roulement 3 pourront être constitués par des galets à gorge triangulaire et pourront être destinés à être engagés sur un rail de guidage 27 de section droite triangulaire formé sur la piste 26.

Selon une seconde forme de réalisation, la bande roulement du troisième organe de roulement est lisse.

Selon une forme particulièrement avantageuse de l'invention, le deuxième organe moteur 24 est solidarisé à une platine montée à rotation selon un axe vertical, ladite platine selon cet axe étant accouplée à l'arbre de sortie vertical d'un troisième organe moteur piloté et commandé par l'unité de commande et de contrôle. Cette disposition assure la directivité du troisième organe de roulement. Ainsi en activant les deuxième et troisième organes moteurs il est possible de commander et de contrôler l'évolution du robot, non plus sur des rails de guidage qui déterminent un parcours immuable mais sur un plan horizontal, selon un parcours quelconque et variable mais contrôlé et commandé à par ondes hertziennes ou par ondes ultrasonores. A cet effet le robot sera équipé d'un récepteur d'ondes hertziennes ou d'un récepteur d'ondes ultrasonores connecté électriquement à l'unité de commande et de contrôle 7 et sera prévu un poste de télécommande disposé à distance, ce poste étant pourvu d'un émetteur d'ondes hertziennes ou d'un émetteur d'ondes ultrasonores destiné à être piloté par un préposé et/ou par un ordinateur, ce dernier par télécommande assurant le guidage du robot dans l'espace dans lequel il doit évoluer, cet espace pouvant être un local comportant un ou plusieurs étages dont la topographie et l'emplacement des meubles et autres objets l'équipant sont connus et mémorisés dans des registres de mémoires. Le poste de télécommande sera équipé d'un écran par lequel le préposé pourra visualiser le plan du local et visualiser la position du robot dans ce local en vue de son pilotage. Pour assurer le repérage de sa position, le robot sera équipé d'un système d'écho-localisation connecté électriquement à l'unité de commande et de contrôle 7 et d'un émetteur d'ondes hertziennes ou d'ondes ultrasonores pour indiquer au poste de télécommande sa position, cet émetteur étant également connecté électriquement à l'unité de commande et de contrôle 7. Par ailleurs le poste de télécommande sera équipé d'un récepteur d'ondes hertziennes ou d'ondes ultrasonores pour recevoir la position du robot. Ce robot sera équipé de détecteurs d'obstacles judicieusement disposés en périphérie, constitués à titre d'exemple, par des détecteurs à ultrasons par des radars etc. . Ces détecteurs sont connectés électriquement à l'unité de commande et de contrôle 7.

Dès que le robot rencontre un obstacle sur son parcours, l'unité de commande et de contrôle 7 commande l'arrêt du second moteur 24 et active le système d'écho-localisation et envoie au poste de télécommande un message représentatif de l'arrêt du robot et de sa position. Le préposé et/ou l'ordinateur pourra alors définir un autre parcours.

Il y a lieu de noter que le mode de transmission n'est pas limité à l'emploi d'ondes hertzienne ou ultrasonores, tout autre type d'onde pouvant être utilisé par exemple des ondes infrarouges.

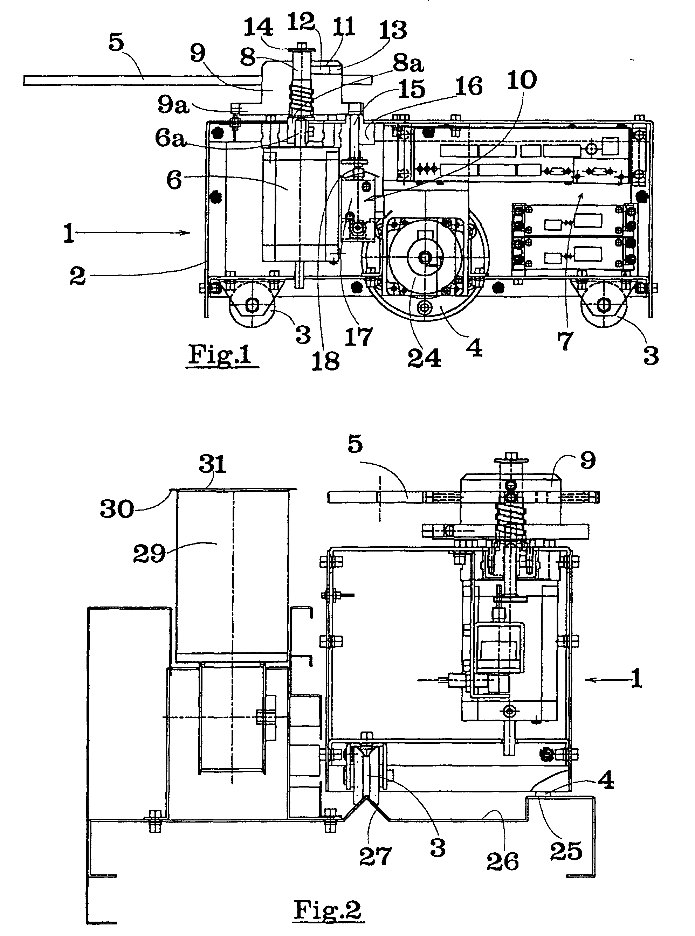

Le bras 5 en extrémité libre peut être doté d'une pince de préhension, d'un outil, d'une tête de lecture et/ou d'écriture, d'une fourche de levage, d'un instrument de mesure, d'un outil de nettoyage ou bien comme on peut le voir en figure 2 de deux échancrures opposées 28 par la bordure de chacune desquelles il est destiné à s'engager sous le rebord de préhension d'un objet à saisir et à transporter.

Le robot tel que décrit est destiné à équiper une installation de distribution de matières solides et/ou liquides et/ou pâteuses, cette installation pouvant éventuellement assurer le traitement de ces matières. A cet effet l'installation comporte au moins un poste de distribution de matières solides et/ou liquides et/ou pâteuses selon des quantités dosées et éventuellement un ou plusieurs poste(s) de traitement. Ces différents postes sont disposés les uns à la suite des autres le long de la piste 26 qui comprend, comme dit précédemment, d'une part la crémaillère 25 et d'autre part le rail de guidage 27. La crémaillère et le rail de guidage sont parallèle l'un à l'autre, les organes de roulement 3, 4 du robot étant destinés à coopérer avec la crémaillère et le rail de guidage.

Les matières délivrées par les différents postes de l'installation sont recueillies dans des récipients cylindriques 29 comportant chacun un rebord de préhension 30 le long du buvant. Chaque récipient est transporté de poste en poste par le robot manipulateur et après mélange des différents constituants selon un programme préétabli, d'abord, le cas échéant vers un poste agitateur puis vers un poste d'évacuation.

Pour éviter l'évaporation des produits liquides, ou plus généralement des composants volatils des matières distribuées, chaque récipient 29 est susceptible de recevoir un couvercle 31. Ainsi l'installation est équipée d'un distributeur 32 de couvercle 31. Ce distributeur comporte un châssis supportant un magasin de couvercle dans lequel les couvercles sont empilés selon une pile. De plus ce distributeur 32 comporte un moyen de prélèvement et de distribution pour prélever le couvercle inférieur de la pile et le distribuer au récipient 29 préalablement positionné sous la pile par le robot.

Chaque couvercle 29 comprend une forme de tampon tronconique réalisée par emboutissage bordée par une collerette de préhension, les couvercles dans le magasin étant empilés les uns dans les autres par leur forme de tampon. Les collerettes des couvercles, dans la pile formée, sont régulièrement écartées les unes des autres.

Le moyen de prélèvement du couvercle est constitué par au moins trois tiges verticales 33 écartées les unes des autres et définissant un volume d'empilement dans lequel est formée la pile de couvercle 29. Les tiges 33 sont montées en rotation dans des paliers supérieurs solidaires d'une platine supérieure horizontale 35 et dans des paliers inférieurs fixés à une platine inférieure horizontale 37. Cette platine 37 est prévue avec un perçage traversant circulaire 38 de passage des couvercles. Chaque tige 33, en dessous de la platine inférieure 37, est pourvue d'un embout fileté 39 dans le filet duquel est engagé le rebord de préhension du couvercle 29, les tiges étant entraînées simultanément en rotation par un ensemble moteur 40 dans le sens de la distribution du couvercle.

Le pas du filet de chaque embout fileté 39 est égal ou est un multiple de l'intervalle entre deux collerettes consécutives.

L'ensemble moteur 40 est constitué par un moteur électrique 41 fixé par son carter à la platine supérieure 35 comportant sur l'arbre de sortie un pignon d'entraînement 42 coopérant en engrènement avec un deuxième pignon 43 calé sur l'une des tiges, ce deuxième pignon étant engrené avec une roue dentée de transmission 44, avec laquelle coopèrent en engrènement deux autres pignons 43 respectivement calés sur les deux autres tiges 33.

Les différents moteurs du robot et le moteur 41 du distributeur de couvercles sont avantageusement du même type ce qui permet une réduction sensible du coût de l'ensemble.

De plus ces moteurs sont alimentés en énergie électrique suivant une tension bien inférieure à leur tension normale d'utilisation ce qui permet d'accroître tant la fiabilité de l'ensemble que la sécurité.

Il va de soi que la présente invention peut recevoir tous aménagements et variantes du domaine des équivalents techniques sans pour autant sortir du cadre du présent brevet tel que défini par les revendications ci-jointes.

## Revendications

1. Robot manipulateur motorisé (1) comportant un premier moteur (6) et un bras manipulateur (5) déplaçable par le premier moteur (6) piloté par une unité de commande et de contrôle (7), ledit premier moteur (6) et ladite unité (7) étant installés dans un bâti (2) monté sur des organes de roulement (3), (4), et
- le premier moteur (6) étant équipé d'un arbre de sortie rotatif (6a) sur lequel un couple mécanique est disponible, **caractérisé en ce que** :
- le bras manipulateur (5) est fixé par une des ses extrémités à un moyeu (9) pourvu d'un taraudage axial dans lequel est engagée en vissage la partie filetée d'un arbre d'entraînement (8) accouplé à l'arbre de sortie rotatif du premier moteur,
- un mécanisme de frein est lié au moyeu (9) et à l'arbre d'entraînement (8), ce mécanisme de frein assurant l'immobilisation du moyeu (9) par rapport à l'arbre d'entraînement (8) tant que le couple résistant exercé sur le moyeu (9) est inférieur à une valeur prédéterminée, et permettant la rotation de l'un par rapport à l'autre lorsque le couple résistant est égal à cette valeur,
- le robot comporte un mécanisme de blocage en rotation (10) activable par l'unité de commande et de contrôle (7) pour bloquer la rotation du moyeu (9) et du bras manipulateur (5), ce mécanisme lorsqu'il est activé agissant en blocage sur le moyeu (9) et/ou sur le bras, ledit bras manipulateur (5) pouvant alors être déplacé en translation par rapport au châssis par activation du premier moteur (6).

2. Robot manipulateur (1) selon la revendication 1, **caractérisé en ce que** :
- le taraudage axial pratiqué dans le moyeu (9) est prolongé axialement par un alésage lisse,
- l'arbre d'entraînement, dans le prolongement axial de sa partie filetée est dotée d'une portée lisse engagée dans l'alésage lisse du moyeu (9),
- le mécanisme de frein est constitué par un tampon (12) en matière synthétique engagé dans un perçage radial (11) pratiqué dans le moyeu (9) et débouchant dans l'alésage axial de ce dernier, ledit tampon (12) étant maintenu en pression contre la portée lisse de l'arbre d'entraînement (8).

3. Robot manipulateur (1) selon la revendication 2 **caractérisé en ce que** le tampon (12) est maintenu contre l'arbre d'entraînement (8) par la poussée axiale exercée par une vis (13) engagée en vissage dans un taraudage formé dans le perçage radial (11).

4. Robot manipulateur (1) selon l'une quelconque des revendications précédentes, **caractérisé en ce que** l'arbre d'entraînement (8), extérieurement au moyeu (9), en extrémité libre comporte une butée (14) formant épaulement pour limiter la course linéaire du bras (5).

5. Robot manipulateur (1) selon l'une quelconque des revendications précédentes, **caractérisé en ce que** le mécanisme de blocage en rotation (10) est constitué par un doigt de blocage (15) monté de manière mobile en translation dans un palier (16) solidaire du bâti et par un organe moteur (17) d'actionnement du doigt, piloté par l'unité de contrôle et de commande (7), ledit organe moteur (17) possédant un arbre de sortie à déplacement linéaire lequel est solidarisé au doigt de blocage (15), ledit doigt de blocage (15), lorsque l'organe moteur (17) est activé venant s'engager dans un perçage (22) pratiqué dans le moyeu (9) pour établir une liaison par obstacle et bloquer ce dernier en rotation.

6. Robot manipulateur (1) selon la revendication 5 **caractérisé en ce que** l'arbre de sortie à déplacement linéaire de l'organe moteur (17) et le doigt de blocage (15) sont solidarisés l'un à l'autre par un liaison semi-rigide.

7. Robot manipulateur (1) selon la revendication 6, **caractérisé en ce que** l'arbre à déplacement linéaire de l'organe de moteur et le doigt de blocage sont axialement décalés l'un par rapport à l'autre et que la liaison semi-rigide est constituée d'une part d'une forme de fourche formée dans un disque (19) fixé en partie inférieure du doigt de blocage (15) et d'une gorge circulaire (20) creusée dans une pièce d'embout cylindrique (21) fixée à l'arbre de sortie de l'organe moteur (17), la forme de fourche étant engagée dans la gorge (20) de la pièce d'embout (21).

8. Robot manipulateur (1) selon l'une quelconque des revendications précédentes, **caractérisé par** des moyens de détection du blocage du bras manipulateur (5) en rotation activés lorsque le mécanisme (10) de blocage en rotation est désactivé.

9. Robot manipulateur (1) selon l'une quelconque des revendications précédentes, **caractérisé en ce que** l'un des organes de roulement (4) est accouplé à un second moteur (24) piloté par l'unité de commande et de contrôle (7).

10. Robot manipulateur (1) selon la revendication 9, **caractérisé en ce que** sont prévus trois organes de roulement (3), (4) dont les premier et deuxième (3) sont placés d'un côté du châssis et le troisième (4) de l'autre.

11. Robot manipulateur (1) selon la revendication 10, **caractérisé en ce que** le troisième organe de roulement (4) est accouplé à l'arbre de sortie du second organe moteur (24).

12. Robot manipulateur (1) selon l'une quelconque des revendications 9 à 11, **caractérisé par** un codeur incrémental accouplé à l'arbre de sortie du second organe moteur (24).

13. Robot manipulateur (1) selon l'une quelconque des revendications précédentes, **caractérisé en ce que** le troisième organe de roulement (4) est constitué par une roue crantée et est destiné à coopérer en engrènement avec une crémaillère (25) formée sur une piste (26) sur laquelle ledit robot (1) est destiné à évoluer.

14. Robot manipulateur (1) selon l'une quelconque des revendications 10 à 13 **caractérisé en ce que** le premier et deuxième organe de roulement (3) sont constitués par des galets à gorge triangulaire et sont destinés à être engagés sur un rail de guidage (27) de section droite triangulaire formé sur une piste (26) sur laquelle le robot est destiné à évoluer.

15. Robot manipulateur (1) selon l'une quelconque des revendications 1 à 12, **caractérisé en ce que** le deuxième organe moteur (24) est solidarisé à une platine montée à rotation selon un axe vertical, ladite platine selon cet axe étant accouplée à l'arbre de sortie vertical d'un troisième organe moteur.

16. Robot manipulateur (1) selon l'une quelconque des revendications précédentes, **caractérisé en ce que** le moyeu (9) est équipé d'au moins un repère (23) face à la trajectoire duquel est disposé un détecteur connecté électriquement à l'unité de contrôle et de commande (7), ce détecteur fournissant un signal de détection du repère (23), ce signal étant utilisé par l'unité de contrôle et de commande (7) pour repérer la position angulaire origine du bras (5).

17. Robot manipulateur (1) selon la revendication 16, **caractérisé en ce que** le repère d'initialisation (23) est constitué par une surépaisseur périphérique au moyeu (9), limitée par deux faces radiales d'extrémité.

18. Robot manipulateur (1) selon l'une quelconque des revendications précédentes, **caractérisé en ce que** le bras manipulateur (5) en extrémité libre est doté de deux échancrures opposées (28) par la bordure de chacune desquelles il est destiné à s'engager sous le rebord de préhension d'un objet à saisir et à transporter.

19. Robot manipulateur (1) selon l'une quelconque des revendications précédentes, **caractérisé en ce que** équipé d'un récepteur d'ondes hertziennes ou d'un récepteur d'ondes ultrasonores connecté électriquement à l'unité de commande et de contrôle pour recevoir des signaux de télécommandes d'un poste de télécommande disposé à distance, ce poste étant pourvu d'un émetteur d'ondes hertziennes ou d'un émetteur d'ondes ultrasonores destiné à être piloté par un préposé et/ou un ordinateur, ce dernier par télécommande assurant le guidage du robot.

20. Robot manipulateur (1) selon la revendication 19 **caractérisé en ce qu'**il est équipé d'un système d'écho-localisation connecté électriquement à l'unité de commande et de contrôle 7 et d'un émetteur pour indiquer au poste de télécommande sa position, cet émetteur étant également connecté électriquement à l'unité de commande et de contrôle (7).

21. Installation **caractérisée en ce qu'**elle est équipée d'au moins un robot (1) selon l'une quelconque des revendications précédentes.

22. Installation selon la revendication 21 **caractérisée en ce qu'**elle comporte au moins un poste de distribution de matières solides et/ou liquides et/ou pâteuses selon des quantités dosées, ces différents postes étant disposés les uns à la suite des autres en regard d'au moins une piste (26) sur laquelle évolue le robot (1).

23. Installation selon la revendication 21, **caractérisée en ce que** la piste comprend d'une part une crémaillère (25) et d'autre part un rail de guidage (27), la crémaillère (25) et le rail de guidage (27) étant parallèles l'un à l'autre, les organes de roulement (3), (4) du robot (1) étant destinés à coopérer avec la crémaillère (25) et le rail de guidage (27).

24. Installation selon la revendication 21 ou la revendication 23, **caractérisée en ce que** les produits à traiter sont disposés dans des récipients cylindriques (29) comportant chacun un rebord de préhension (30) le long du buvant.

25. Installation selon l'une quelconque des revendications 21 à 24, **caractérisée en ce qu'**elle est équipée d'un distributeur (32)de couvercle (31) comportant un châssis supportant un magasin de couvercle dans lequel les couvercles y sont empilés selon une pile, ledit distributeur comportant un moyen de prélèvement et de distribution pour prélever le couvercle inférieur de la pile et le distribuer au récipient (29) préalablement positionné sous la pile par le robot (1).

26. Installation selon la revendication 25, **caractérisée en ce que** chaque couvercle (31) comprend une forme de tampon tronconique réalisée par emboutissage bordée par une collerette de préhension, les couvercles dans le magasin étant empilés les uns dans les autres par leur forme de tampon.

27. Installation selon la revendication 26, **caractérisée en ce que** les collerettes des couvercles, dans la pile formée sont régulièrement écartées les unes des autres.

28. Installation selon l'une quelconque des revendications 25 à 27, **caractérisée en ce que** le moyen de prélèvement du couvercle de distribution est constitué par au moins trois tiges verticales (33) écartées les unes des autres définissant un volume d'empilement dans lequel est formée la pile de couvercle, les tiges étant montées en rotation dans des paliers supérieurs solidaires d'une platine supérieure horizontale (35) et dans des paliers inférieurs fixés à une platine inférieure horizontale (37) prévue avec un perçage traversant circulaire (38) de passage des couvercles (31), chaque tige (33), en dessous de la platine inférieure (37) étant pourvue d'un embout fileté (39) dans le filet duquel est engagé le rebord de préhension du couvercle (31), les tiges (33) étant entraînées simultanément en rotation par un ensemble moteur (41) dans le sens de la distribution du couvercle.

29. Installation selon la revendication 27 et 28, **caractérisée en ce que** le pas du filet de chaque embout fileté (39) est égal ou est un multiple de l'intervalle entre deux collerettes de préhension consécutives.

30. Installation selon la revendication 28 ou la revendication 29, **caractérisée en ce que** l'ensemble moteur (40) est constitué par un moteur électrique (41) fixé par son carter à la platine supérieure (35), comportant sur son arbre de sortie un pignon d'entraînement (42) coopérant en engrènement avec un deuxième pignon (43) calé sur l'une des tiges (33), ce deuxième pignon (42) étant engrené avec une roue dentée de transmission (44), avec laquelle coopèrent en engrènement deux autres pignons (43) respectivement calés sur les deux autres tiges (33).

## Patentansprüche

1. Motorisierter Handhabungsroboter (1) mit einem ersten Motor (6) und einem Manipulatorarm (5), der durch den ersten Motor (6) bewegbar ist, der durch eine Steuerund Kontrolleinheit (7) geführt ist, wobei der erste Motor (6) und die Einheit (7) in einem auf Rollelementen (3), (4) montierten Gerüst (2) installiert sind und der erste Motor (6) mit einer drehbaren Abtriebswelle (6a) ausgerüstet ist, an der ein mechanisches Moment verfügbar ist, **dadurch gekennzeichnet, daß**
- der Manipulatorarm (5) mit einem seiner Enden an einer Nabe (9) befestigt ist, die mit einem axialen Innengewinde versehen ist, in das der Gewindeabschnitt einer Antriebswelle (8) eingeschraubt ist, die mit der rotierenden Abtriebswelle des ersten Motors gekuppelt ist,
- ein Bremsmechanismus mit der Nabe (9) und der Antriebswelle (8) verbunden ist, wobei dieser Bremsmechanismus die Festbremsung der Nabe (9) bezüglich der Antriebswelle (8) besorgt, sobald das auf die Nabe (9) ausgeübte Widerstandsmoment kleiner als ein vorbestimmter Wert ist und die Drehung der einen bezüglich der anderen zuläßt, wenn das Widerstandsmoment gleich diesem Wert ist,
- der Roboter einen Drehblockierungsmechanismus (10) aufweist, der durch die Steuer- und Kontrolleinheit (7) aktivierbar ist, um die Drehung der Nabe (9) und des Manipulatorarms (5) zu blockieren, wobei dieser Mechanismus, wenn er aktiviert ist, blockierend auf die Nabe (9) und/oder den Arm einwirkt, wobei der Manipulatorarm (5) weiterhin bezüglich des Chassis durch Aktivierung des ersten Motors (6) verschoben werden kann.

2. Handhabungsroboter (1) nach Anspruch 1, **dadurch gekennzeichnet, daß**
- das in der Nabe (9) ausgebildete axiale Innengewinde axial durch eine glatte Bohrung verlängert ist,
- die Antriebswelle in der axialen Verlängerung ihres Gewindeabschnitts mit einer glatten Lagerfläche versehen ist, die in der glatten Bohrung der Nabe (9) sitzt,
- der Bremsmechanismus aus einem Puffer (12) aus Kunststoff besteht, der in einer radialen Bohrung (11) sitzt, die in der Nabe (9) ausgebildet ist und in deren axialer Bohrung mündet, wobei der Puffer (12) gegen die glatte Lagerfläche der Antriebswelle (8) angedrückt gehalten wird.

3. Handhabungsroboter (1) nach Anspruch 2, **dadurch gekennzeichnet, daß** der Puffer (12) gegen die Antriebswelle (8) durch den axialen Druck gehalten wird, der durch eine Schraube (13) ausgeübt wird, die in ein in der radialen Bohrung (11) ausgebildetes Innengewinde eingeschraubt ist.

4. Handhabungsroboter (1) nach einem der vorangehenden Ansprüche, **dadurch gekennzeichnet, daß** die Antriebswelle (8) außerhalb der Nabe (9) am freien Ende einen Anschlag (14) aufweist, der eine Schulter bildet, um die lineare Laufstrecke des Arms (5) zu begrenzen.

5. Handhabungsroboter (1) nach einem der vorangehenden Ansprüche, **dadurch gekennzeichnet, daß** der Drehblockierungsmechanismus (10) aus einem Blockierungsstift (15) besteht, der in einem mit dem Gerüst fest verbundenen Lager (16) verschiebbar gehalten ist, und einem Antriebselement (17) für die Betätigung des Stifts, das von der Steuer- und Kontrolleinheit (7) geführt ist, wobei dieses Antriebselement (17) eine Abtriebswelle mit linearer Verschiebung aufweist, die fest mit dem Blockierungsstift (15) verbunden ist, wobei der Blockierungsstift (15), wenn das Antriebselement (17) aktiviert ist, in eine in der Nabe (9) ausgebildete Bohrung (22) eingreift, um eine Sperrverbindung herzustellen und die Drehung der Nabe zu blockieren.

6. Handhabungsroboter (1) nach Anspruch 5, **dadurch gekennzeichnet, daß** die linear verschiebbare Abtriebswelle des Antriebselements (17) und der Blockierungsstift (15) durch eine halbstarre Verbindung miteinander verbunden sind.

7. Handhabungsroboter (1) nach Anspruch 6, **dadurch gekennzeichnet, daß** die linear verschiebbare Welle des Antriebselements und der Blockierungsfinger axial zueinander versetzt sind und daß die halbstarre Verbindung einerseits aus einer Gabelform besteht, die in einer am unteren Teil des Blockierungsstifts (15) befestigten Scheibe (19) ausgebildet ist, und einer Kreisnut (20), die in einem zylindrischen Ansatzstück (21) vertieft ist, das an der Abtriebswelle des Antriebselements (17) befestigt ist, wobei die Gabelform in die Nut (20) des Ansatzstücks (21) eingreift.

8. Handhabungsroboter (1) nach einem der vorangehenden Ansprüche, **gekennzeichnet durch** Detektormittel zum Erfassen der Drehblockierung des Manipulatorarms (5) die aktiviert sind, wenn der Drehblockierungsmechanismus (10) entaktiviert ist.

9. Handhabungsroboter (1) nach einem der vorangehenden Ansprüche, **dadurch gekennzeichnet, daß** eines der Rollelemente (4) mit einem zweiten Antriebselement (24) gekuppelt ist, das von der Steuer- und Kontrolleinheit (7) geführt ist.

10. Handhabungsroboter (1) nach Anspruch 9, **dadurch gekennzeichnet, daß** drei Rollelemente (3), (4) vorgesehen sind, von denen das erste und zweite (3) auf der einen Seite des Chassis und das dritte (4) auf der anderen angeordnet sind.

11. Handhabungsroboter (1) nach Anspruch 10, **dadurch gekennzeichnet, daß** das dritte Rollelement (4) mit der Abtriebswelle des zweiten Antriebselements (24) gekuppelt ist.

12. Handhabungsroboter (1) nach einem der Ansprüche 9 bis 11, **gekennzeichnet durch** einen Inkrementkodierer, der mit der Abtriebswelle des zweiten Antriebselements (24) gekuppelt ist.

13. Handhabungsroboter (1) nach einem der vorangehenden Ansprüche, **dadurch gekennzeichnet, daß** das dritte Rollelement (4) aus einem formgezahnten Rad besteht und bestimmt ist zum kämmenden Zusammenwirken mit einer Zahnstange (25), die an einer Piste (26) ausgebildet ist, auf der der Roboter (1) sich entlang bewegen soll.

14. Handhabungsroboter (1) nach einem der Ansprüche 10 bis 13, **dadurch gekennzeichnet, daß** das erste und zweite Rollelement (3) aus Rollen mit dreieckiger Rille bestehen und zum Einsetzen auf eine Führungsschiene (27) mit dreieckigem Querschnitt bestimmt sind, die auf einer Piste (26) gebildet ist, auf der sich der Roboter hin- und herbewegen soll.

15. Handhabungsroboter (1) nach einem der Ansprüche 1 bis 12, **dadurch gekennzeichnet, daß** das zweite Antriebselement (24) fest mit einer Platine verbunden ist, die um eine vertikale Achse drehbar montiert ist, wobei die Platine längs dieser Achse mit der vertikalen Abtriebswelle eines dritten Motors gekuppelt ist.

16. Handhabungsroboter (1) nach einem der vorangehenden Ansprüche, **dadurch gekennzeichnet, daß** die Nabe (9) mit mindestens einer Markierung (23) ausgerüstet ist und gegenüber deren Laufstrecke ein Detektor angeordnet ist, der elektrisch mit der Steuer- und Kontrolleinheit (7) verbunden ist, wobei dieser Detektor ein Signal der Detektion der Markierung (23) liefert und dieses Signal von der Steuer- und Kontrolleinheit (7) benutzt wird, um die ursprüngliche Winkelposition des Arms (5) zu erfassen.

17. Handhabungsroboter (1) nach Anspruch 16, **dadurch gekennzeichnet, daß** die Initialisierungs-Markierung (23) aus einer Überdicke am Umfang der Nabe (9) besteht, die von zwei radialen Endflächen begrenzt ist.

18. Handhabungsroboter (1) nach einem der vorangehenden Ansprüche, **dadurch gekennzeichnet, daß** der Manipulatorarm (5) an seinem freien Ende mit zwei gegenüberliegenden Ausnehmungen (28) versehen ist, durch deren Ränder er unter die Griffkante eines zu ergreifenden und zu transportierenden Gegenstandes eingreifen kann.

19. Handhabungsroboter (1) nach einem der vorangehenden Ansprüche, **dadurch gekennzeichnet, daß** er mit einem Empfänger für Hertzsche Wellen oder für Ultraschallwellen ausgerüstet ist, der elektrisch mit der Steuer- und Kontrolleinheit verbunden ist, um Fernsteuersignale einer entfernt angeordneten Fernsteuerstation zu empfangen, wobei diese Station mit einem Sender für Hertzsche Wellen oder Ultraschallwellen ausgerüstet ist, der von einem Betriebsleiter und/oder einem Rechner geführt wird, der so durch Fernsteuerung den Roboter führt.

20. Handhabungsroboter (1) nach Anspruch 19, **dadurch gekennzeichnet, daß** er mit einem Echo-Ortungssystem ausgerüstet ist, das elektrisch mit der Steuer- und Kontrolleinheit (7) verbunden ist, und mit einem Sender, um der Fernsteuerungsstation seine Position anzuzeigen, wobei dieser Sender auch elektrisch mit der Steuer- und Kontrolleinheit (7) verbunden ist.

21. Einrichtung, **dadurch gekennzeichnet, daß** sie mit mindestens einem Roboter (1) nach einem der vorangehenden Ansprüche ausgerüstet ist.

22. Einrichtung nach Anspruch 21, **dadurch gekennzeichnet, daß** sie mindestens eine Abgabestation für feste und/oder flüssige und/oder pastenförmige Stoffe in dosierten Mengen aufweist, wobei diese verschiedenen Stationen die eine auf die anderen folgend gegenüber mindestens einer Piste (26) angeordnet sind, auf der sich der Roboter (1) hin- und herbewegt.

23. Einrichtung nach Anspruch 21, **dadurch gekennzeichnet, daß** die Piste einerseits eine Zahnstange (25) und andererseits eine Führungsschiene (27) aufweist, wobei die Zahnstange (25) und die Führungsschiene (27) zueinander parallel sind und wobei die Rollelemente (3), (4) des Roboters (1) zum Zusammenwirken mit der Zahnstange (25) und der Führungsschiene (27) bestimmt sind.

24. Einrichtung nach Anspruch 21 oder Anspruch 23, **dadurch gekennzeichnet, daß** die zu behandelnden Produkte in zylindrischen Behältern (29) angeordnet sind, die jeder einen Griffrand (30) längs ihrer Füllöffnung aufweisen.

25. Einrichtung nach einem der Ansprüche 21 bis 24, **dadurch gekennzeichnet, daß** sie mit einem Verteiler (32) für Deckel (31) mit einem Chassis ausgerüstet ist, das ein Deckelmagazin trägt, in dem die Deckel gestapelt sind, wobei der Verteiler eine Abnahme- und Verteilvorrichtung aufweist, um den unteren Deckel des Stapels abzunehmen und ihn auf dem Behälter (29) abzulegen, der zuvor vom Roboter (1) unter dem Stapel positioniert wurde.

26. Einrichtung nach Anspruch 25, **dadurch gekennzeichnet, daß** jeder Deckel (31) eine kegelstumpfförmige Stopfenform aufweist, die durch Tiefziehen hergestellt wurde und von einem Griffrand umgeben ist, wobei die Deckel im Magazin einer im anderen entsprechend ihrer Stopfenform gestapelt sind.

27. Einrichtung nach Anspruch 26, **dadurch gekennzeichnet, daß** die Kragen der Deckel in dem gebildeten Stapel regelmäßige Abstände voneinander haben.

28. Einrichtung nach einem der Ansprüche 25 bis 27, **dadurch gekennzeichnet, daß** die Vorrichtung zur Abnahme und Abgabe des Deckels aus mindestens drei vertikalen Stangen (33) besteht, die voneinander entfernt sind und ein Stapelvolumen definieren, in dem der Stapel von Deckeln gebildet ist, wobei die Stangen drehbar montiert sind in oberen Lagern, die mit einer oberen horizontalen Platine (35) fest verbunden sind, und in unteren Lagern, die an einer unteren horizontalen Platine (37) befestigt sind, die mit einer kreisförmigen Durchgangsbohrung (38) für den Durchtritt der Deckel (31) versehen ist, wobei jede Stange (33) unterhalb der unteren Platine (37) mit einem mit Gewinde versehenen Ansatzstück (39) versehen ist, in deren Gewinde der Griffrand des Deckels (31) eingreift, wobei die Stangen (33) gleichzeitig durch ein Antriebsaggregat (40, 41) im Sinn der Abgabe des Deckels gedreht werden.

29. Einrichtung nach Anspruch 27 und 28, **dadurch gekennzeichnet, daß** der Gewindeschritt jedes Gewindeansatzes (39) gleich dem Intervall oder einem Mehrfachen des Intervalls zwischen zwei aufeinanderfolgenden Griffkragen ist.

30. Einrichtung nach Anspruch 28 oder Anspruch 29, **dadurch gekennzeichnet, daß** das Antriebsaggregat (40) aus einem Elektromotor (41) besteht, der mit seinem Gehäuse an der oberen Platine (35) befestigt ist, an seiner Abtriebswelle ein Antriebsritzel (42) trägt, das mit einem zweiten Ritzel (43) kämmt, das auf eine der Stangen (33) aufgekeilt ist, wobei dieses zweite Ritzel (43) mit einem Übertragungszahnrad (44) kämmt, mit dem zwei andere Ritzel (43) kämmen, die jeweils auf den zwei anderen Stangen (33) aufgekeilt sind.

## Claims

1. A motorised manipulator robot including a first motor (6) and a manipulator arm (5) able to be moved by the first motor (6) controlled by a control and actuation unit (7), said first motor (6) and said unit (7) being installed in a frame (2) mounted on travel devices (3), (4), and
- the first motor (6) being equipped with a rotary output shaft (6a) on which a mechanical torque is available, **characterised in that**:
- the manipulator arm (5) is fixed by one of its ends to a hub (9) provided with an axial thread in which there is engaged by screwing the threaded part of a drive shaft (8) coupled to the rotary output shaft of the first motor,
- a brake mechanism is connected to the hub (9) and to the drive shaft (8), this brake mechanism providing the immobilisation of the hub (9) with respect to the drive shaft (8) as long as the torque exerted on the hub (9) is less than a predetermined value, and allowing the rotation of one with respect to the other when the torque is equal to this value,
- the robot includes a mechanism for locking in rotation (10) which can be activated by the control and actuation unit (7) in order to lock the rotation of the hub (9) and of the manipulator arm (5), this mechanism, when it is activated, acting in locking mode on the hub (9) and/or on the arm, said manipulator arm (5) then being able to be moved in translation with respect to the chassis by activation of the first motor (6).

2. A manipulator robot (1) according to claim 1, **characterised in that**:
- the axial thread formed in the hub (9) is extended axially by a smooth bore,
- the drive shaft, in the axial extension of its threaded part, is provided with a smooth surface engaged in the smooth bore of the hub (9),
- the brake mechanism is formed by a plug (12) made from synthetic material engaged in a radial drilling (11) formed in the hub (9) and opening out in the axial bore of the latter, said plug (12) being held under pressure against the smooth surface of the drive shaft (8).

3. A manipulator robot (1) according to claim 2, **characterised in that** the plug (12) is held against the drive shaft (8) by the axial thrust exerted by a screw (13) engaged by screwing in a thread formed in the radial drilling (11).

4. A manipulator robot (1) according to any one of the preceding claims, **characterised in that** the drive shaft (8), externally to the hub (9), at its free end has a stop (14) forming a shoulder in order to limit the linear travel of the arm.

5. A manipulator robot (1) according to any one of the preceding claims, **characterised in that** the mechanism for locking in rotation (10) is formed by a locking finger (15) mounted so as to be able to move in translation in a bearing (16) fixed to the frame and a drive member (17) for actuating the finger, controlled by the control and actuation unit (7), said drive member (17) including an output shaft with linear movement which is fixed to the locking finger (15), said locking finger (15), when the drive member (17) is activated, coming to be engaged in a drilling (22) formed in the hub (9) in order to establish a connection by obstacle and to lock said hub with respect to rotation.

6. A manipulator robot (1) according to Claim 5, **characterised in that** the drive shaft with linear movement of the drive member (17) and the locking finger (15) are fixed to each other by a semi-rigid connection.

7. A manipulator robot (1) according to claim 6, **characterised in that** the shaft with linear movement of the drive member and the locking finger are axially offset with respect to each other and **in that** the semi-rigid connection is formed on the one hand by a fork shape formed in a disc (19) fixed in the bottom part of the locking finger (15) and a circular groove (20) formed in a cylindrical end piece (21) fixed to the output shaft of the drive member (17), the fork shape being engaged in the groove (20) of the end piece (21).

8. A manipulator robot (1) according to any one of the preceding claims, **characterised in that** means for detecting the locking of the manipulator arm (5) with respect to rotation activated when the mechanism (10) for locking with respect to rotation is deactivated.

9. A manipulator robot (1) according to any one of the preceding claims, **characterised in that** one of the running devices (4) is coupled to a second motor (24) controlled by the control and activation unit (7).

10. A manipulator robot (1) according to claim 9, **characterised in that** three running devices (3), (4) are provided, the first and second (3) of which are placed on one side of the chassis and the third (4) on the other.

11. A manipulator robot (1) according to claim 10, **characterised in that** the third running device (4) is coupled to the output shaft of the second drive member (24).

12. A manipulator robot (1) according to any one of claims 9 to 11, **characterised by** an incremental coder coupled to the output shaft of the second drive member (24).

13. A manipulator robot (1) according to any one of the preceding claims, **characterised in that** the third running device (4) is formed by a notched wheel and is intended to cooperate by meshing with a rack (25) formed on a track (26) on which said robot (1) is intended to move.

14. A manipulator robot (1) according to any one of claims 10 to 13, **characterised in that** the first and second running devices (3) are formed by rollers with a triangular groove and are intended to be engaged on a guide rail (27) with a triangular cross-section formed on a track (26) on which the robot is intended to move.

15. A manipulator robot (1) according to any one of claims 1 to 12, **characterised in that** the second drive member (24) is fixed to a plate mounted for rotation on a vertical axis, said plate on this axis being coupled to the vertical output shaft of a third drive member.

16. A manipulator robot (1) according to any one of the preceding claims, **characterised in that** the hub (9) is equipped with at least one marking (23) facing the path from which a detector is disposed connected electrically to the control and actuation unit (7), this detector providing a signal detecting the marking (23), this signal being used by the control and actuation unit (7) in order to locate the original angular position of the arm (5).

17. A manipulator robot (1) according to claim 16, **characterised in that** the initialisation marking (23) is formed by a peripheral protrusion on the hub (9), delimited by two radial end faces.

18. A manipulator robot (1) according to any one of the preceding claims, **characterised in that** the manipulator arm (5) at its free end is provided with two opposite scallops (28), by the rim of each of which it is intended to be engaged under the gripping edge of an object to be gripped and transported.

19. A manipulator robot (1) according to any one of the preceding claims, **characterised in that**, equipped with a radio receiver or an ultrasonic wave receiver connected electrically to the control and actuation unit in order to receive remote control signals from a remote control station disposed at a distance, this station being provided with a radio transmitter or an ultrasonic wave transmitter intended to be controlled by an attendant and/or a computer, the latter providing the guidance of the robot by remote control.

20. A manipulator robot (1) according to claim 19, **characterised in that** it is equipped with an echo location system connected electrically to the control and actuation unit 7 and a transmitter for indicating its position to the remote control station, this transmitter also being connected electrically to the control and actuation unit (7).

21. An installation **characterised in that** it equipped with at least one robot (1) according to any one of the preceding claims.

22. An installation according to claim 21, **characterised in that** it includes at least one station for dispensing solid and/or liquid and/or viscous materials in apportioned quantities, these different stations being disposed one after the other facing at least one track (26) on which the robot (1) moves.

23. An installation according to claim 21, **characterised in that** the track includes on the one hand a rack (25) and on the other hand a guide rail (27), the rack (25) and the guide rail (27) being parallel to each other, the running devices (3), (4) of the robot (1) being intended to cooperate with the rack (25) and the guide rail (27).

24. An installation according to claim 21 or claim 23, **characterised in that** the products to be processed are disposed in cylindrical receptacles (29) each including a gripping edge (30) along the rim.

25. An installation according to any one of claims 21 to 24, **characterised in that** it is equipped with a dispenser (32) for lids (31) including a chassis supporting a lid magazine in which the lids are stacked therein in a stack, said dispenser including a taking and dispensing means for taking the bottom lid from the stack and dispensing to the receptacle (29) previously positioned under the stack by the robot (1).

26. An installation according to claim 25, **characterised in that** each lid (31) includes a frustoconical plug shape produced by pressing bordered by a gripping collar, the lids in the magazine being stacked in each other through their plug shape.

27. An installation according to claim 26, **characterised in that** the collars on the lids, in the stack formed, are evenly separated from each other.

28. An installation according to any one of claims 25 to 27, **characterised in that** the means for taking the dispensing lid is formed by at least three vertical rods (33) separated from one another, defining a stacking volume in which the stack of lids is formed, the rods being mounted so as to rotate in top bearings fixed to a horizontal top plate (35) and in bottom bearings fixed to a horizontal bottom plate (37) provided with a circular through aperture (38) for the passage of the lids (31), each rod (33), below the bottom plate (37) being provided with a threaded end piece (39) in the thread of which the gripping edge of the lid (31) is engaged, the rods (33) being driven simultaneously in rotation by a motor assembly (41) in the direction of dispensing of the lid.

29. An installation according to claims 27 and 28, **characterised in that** the pitch of the thread on each threaded end piece (39) is equal to or is a multiple of the gap between two consecutive gripping collars.

30. An installation according to claim 28 or claim 29, **characterised in that** the motor assembly (40) is formed by an electric motor (41) fixed by its casing to the top plate (35), comprising on its output shaft a drive pinion (42) cooperating by meshing with a second pinion (43) keyed on one of the rods (33), this second pinion (42) being meshed with a toothed transmission wheel (44), with which two other pinions (43), respectively keyed on the other two rods (33), cooperate by meshing.
